**Europäisches Patentamt**

**European Patent Office**

**Office européen des brevets**

(19)

(11) Veröffentlichungsnummer : **0 052 232**
**B1**

(12) # EUROPÄISCHE PATENTSCHRIFT

(45) Veröffentlichungstag der Patentschrift :
15.05.85

(51) Int. Cl.⁴ : **G 01 G 15/00**, G 01 G 19/03,
**B 07 C 5/20**

(21) Anmeldenummer : **81108341.9**

(22) Anmeldetag : **15.10.81**

(54) **Verfahren und Vorrichtung zum Kontrollieren des Gewichts von in Behältern kommissionierten Warensendungen.**

(30) Priorität : **14.11.80 DE 3042902**

(43) Veröffentlichungstag der Anmeldung :
**26.05.82 Patentblatt 82/21**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
**DE-A- 2 736 197**
**MESURES; REGULATION; AUTOMATISME, Band 38,**
**Nr.9, September 1973** ‹
**JAPAN ELECTRONIC ENGINEERING, Nr.73, Dezem-**
**ber 1972, M.HIRAYAMA et al.: "Automatic system for**
**measurement of net weights", selten 40-44.**

(73) Patentinhaber : **Ferd. Schulze & Co.**
**Pfingstweidstrasse 10-12**
**D-6800 Mannheim 24 (DE)**

(72) Erfinder : **Weber, Otto**
**Kurpfalzstrasse 21**
**D-6945 Hirschberg (DE)**
Erfinder : **Ohnsmann, Klaus**
**Leharstrasse 32**
**D-6945 Weinhelm (DE)**
Erfinder : **Christ, Ferdinand**
**Lindenstrasse 9**
**D-6761 Welterweiler (DE)**

(74) Vertreter : **Gudel, Diether, Dr. et al**
**Patentanwälte Dr. V. Schmied-Kowarzlk Dipl.-Ing. G.**
**Dannenberg Dr. P. Weinhold Dr. D. Gudel Dipl.-Ing. S.**
**Schubert Dr. P. Barz Grosse Eschenheimer Strasse**
**39**
**D-6000 Frankfurt am Main 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren zum Kontrollieren des Gewichts von in Behältern kommissionierten Warensendungen, wobei man das Leergewicht eines Behälters im Durchlauf mißt und einem Kommissionierrechner übermittelt, das Gewicht des mit den Artikeln dieser Kommission gefüllten Behälters ebenfalls im Durchlauf mißt und an den Rechner übermittelt, der die Differenz beider Gewichte als Istgewicht der Kommission ermittelt und mit dem ihm eingegebenen Sollgewicht der betreffenden Kommission vergleicht, worauf bei einem Abweichen des Istgewichts vom Sollgewicht über eine vorbestimmte Toleranzgrenze hinaus der betreffende Behälter ausgesondert wird, wobei jedem Behälter zugeordneter und mitgegebener Erkennungscode beim Wiegen gelesen und dem Rechner übermittelt wird und beide Waagen das Gewicht ständig messen und das gemessene Gewicht dem Kommissionierrechner übermitteln, sobald der Einschwingvorgang der betreffenden Waage zur Ruhe gekommen ist. Außerdem bezieht sich die Erfindung auf eine Vorrichtung zur Durchführung dieses Verfahrens.

Ein derartiges Verfahren und eine solche Vorrichtung sind beschrieben in einem auf die Anmelderin zurückgehenden Aufsatz in der Zeitschrift VDI-Nachrichten Nr. 40 vom 3. Oktober 1980, S. 7. Dieser Druckschrift können keine Einzelheiten entnommen werden, wie der Rechner sicherstellt, daß er jeweils das Sollgewicht und das Istgewicht desselben Behälters für den Sollgewicht-Istgewicht-Vergleich einander zuordnet, und auch wie die in recht weiten Grenzen schwankenden Gewichte der einzelnen Kommissionen im Durchlauf mit ausreichender Genauigkeit gemessen werden können.

Die DE-A-2 638 214 beschreibt eine Waage, mit der im Durchlauf gemessen werden kann. Die zu messenden Artikel gelangen hierbei über eine Schräge in den Bereich von zwei Impulsgebern, die über der Waage in deren zweiter Hälfte angebracht sind. Sobald der zu wiegende Artikel in den Bereich des ersten Impulsgebers gelangt, wird dadurch ein Impuls ausgelöst, und der Wiegevorgang wird eingeleitet.

Die DE-A-2 736 197 beschreibt einen Kommissionierautomaten, wobei über eine in das System integrierte elektronische Waage das vom Rechner ermittelte Sollgewicht mit dem tatsächlichen Gewicht verglichen wird. Weitere Einzelheiten, wie dieser Kommissionierautomat aufgebaut sein soll, sind dieser Druckschrift nicht zu entnehmen.

In der Zeitschrift « Mesures ; Regulation ; Automatisme », Band 38, Nr. 9, September 1973, S. 37 wird in Kurzfassung ein Verfahren und eine Vorrichtung zum selbsttätigen Wiegen von abgefüllten Behältern beschrieben. Ausführlicher wird dieses Verfahren und diese Vorrichtung in der Zeitschrift « Japan Electronic Engineering », Nr. 73, Dezember 1972, S. 40-44 erläutert. Daraus ergibt sich, daß dort oben offene Behälter jeweils derselben Menge eines bestimmten Füllgutes gefüllt werden sollen. Hierzu werden die Behälter über einen Einlaßförderer auf eine Eingangswaage aufgesetzt, auf deren ortsfester Wiegebrücke deren Gewicht festgestellt wird. Anschließend gelangen die Behälter auf einen Zwischenförderer und von dort zu einer Abfülleinheit. Schließlich gelangen sie über einen Abgabeförderer zu einer Ausgangswaage, in der das Gesamtgewicht des befüllten Behälters gemessen wird. Von dort schließlich gelangt der befüllte Behälter zu einem Abgabeförderer. Um festzustellen, ob jeweils die richtige Menge abgefüllt wurde, und zwar unabhängig von den eventuell schwankenden Gewichten der Behälter, werden deren Gewichte an der Eingangswaage und an der Ausgangswaage miteinander verglichen. Mit diesem System sollen also keine innerhalb recht breiter Grenzen schwankenden Gewichte gemessen und miteinander verglichen werden und es kann dort auch nicht im Durchlauf gewogen werden, weil nämlich beide Waagen jeweils ortsfeste Wiegebrücken haben. Auch die Abfüllstation ist ortsfest ausgebildet, so daß die Behälter nicht nur über ein geeignetes, gesondertes Transportmittel, gegebenenfalls über Arbeiter, zur eigentlichen Abfüllstation transportiert werden müssen, sondern sie müssen auch über einen Arbeiter oder über ein gesondertes Transportmittel auf beide Waagen aufgesetzt und von ihnen wieder abgenommen werden. Diese Merkmale machen dieses vorbeschriebene System ungeeignet für ein Verfahren zum Kontrollieren des Gewichts von in Behältern kommissionierten Warensendungen im Durchlauf.

Der Erfindung liegt daher die Aufgabe zugrunde, ein Verfahren zum Kontrollieren des Gewichts von in Behältern kommissionierten Warensendungen der eingangs genannten Art vorzuschlagen, das eine vollständige Lehre zum technischen Handeln gibt derart, daß jede kommissionierte Warensendung im Durchlauf unabhängig vom Gewicht der betreffenden Kommission daraufhin überprüft werden kann, ob die Kommission richtig zusammengestellt wurde oder nicht. Dabei sollen die unterschiedlichen Gewichte beim Kommissioniervorgang im Durchlauf mit einer für diesen Zweck ausreichenden Präzision gemessen werden können.

Zur Lösung dieser Aufgabe ist das erfindungsgemäße Verfahren dadurch gekennzeichnet, daß der Rechner über den ihm übermittelten Erkennungscode jeweils das Sollgewicht und das Istgewicht desselben Behälters einander zuordnet, daß auf die Wiegebrücke der Waage ein angetriebenes Förderband aufgesetzt ist, über dem sich wenigstens ein Impulsgeber befindet, der über eine Signalleitung mit dem Rechner verbunden ist, und daß sich vor und hinter diesem angetriebenen Förderband weitere angetriebene Förderbänder befinden.

Durch diese Merkmale kann mit ausreichender Genauigkeit im Durchlauf gemessen werden. Die

— leeren oder gefüllten — Behälter gelangen nämlich über das in Förderrichtung erste angetriebene Förderband direkt auf die Wiegebrücke der Waage, wo die Behälter mit gleichbleibender Geschwindigkeit, d. h. ohne Verzögerungen oder Beschleunigungen, auf dieser Wiegebrücke weitertransportiert werden. Die Waage beginnt somit bereits mit dem Einschwingungsvorgang, sobald der Behälter auf ihr angetriebenes Förderband aufgelaufen ist. Sobald der Einschwingungsvorgang innerhalb der gewünschten Wiegegenauigkeit zur Ruhe gekommen ist, befindet sich der betreffende Behälter in Höhe des erwähnten Impulsgebers, der jetzt ein Signal abgibt, welches das momentane Gewicht festlegt und an den Rechner übermittelt. Direkt anschließend gelangt dann der Behälter auf das weitere, angetriebene Förderband. Es ist somit ersichtlich, daß bei beiden Waagen keine Unterbrechung im Transportfluß oder in der Transportgeschwindigkeit der Behälter erfolgt, so daß das erfindungsgemäß Verfahren sich sowohl durch eine ausreichende Wiegegenauigkeit bei allen vorkommenden Gewichten auszeichnet, wie auch durch eine hohe Kontrollkapazität, gemessen in Behältern pro Zeiteinheit.

Eine Waage, die sich für das erläuterte Messen im Durchlauf besonders eignet, ist dadurch gekennzeichnet, daß das Gewicht in mehreren aufeinander folgenden Meßstufen gewogen und das zu erwartende Gewicht dem Rechner übermittelt wird, der vor Durchführung der Wägung die von diesem Gewicht abhängige, zu erwartende Meßstufe der Waage übermittelt und die Waage auf diese Meßstufe voreinstellt. Durch diese Voreinstellung wird die Meßzeit für die betreffende Waage weiterhin verkürzt.

In Transportrichtung des Förderbandes können hintereinander zwei Impulsgeber angeordnet sein, deren Meßwerte gemittelt werden. Dadurch wird die Messgenauigkeit weiterhin erhöht. Bei den meisten Anwendungsfällen genügt aber ein einziger Impulsgeber, der dort anzuordnen ist, wo der Einschwingvorgang der Waage bei allen in Betracht kommenden Gewichten üblicherweise zur Ruhe gekommen ist.

Bevorzugt wird es, wenn an der Aussenwand der Behälter ein optisch lesbarer Code angebracht ist. Der Impulsgeber kann dann als Lichtschranke ausgebildet sein, die in der Höhe reflektierender Folien an den Behältern angebracht ist. Dies ist durch die deutsche Gebrauchsmusterschrift 7 912 638 an sich bekannt.

Die Erfindung wird im folgenden anhand von Ausführungsbeispielen näher erläutert, aus denen sich weitere wichtige Merkmale ergeben. Es zeigt :

Figur 1 schematisch eine Ansicht eines Lagers zur Erläuterung eines Kommissioniervorganges mit Wiegung der kommissionierten Artikel nach der Erfindung ;

Figur 2 schematisch eine Seitenansicht einer der hierbei verwendeten Waagen ;

Figur 3 ein Diagramm zur Erläuterung der Meßstufen einer solchen Waage ; wobei über der Meßzeit das Gewicht aufgetragen ist.

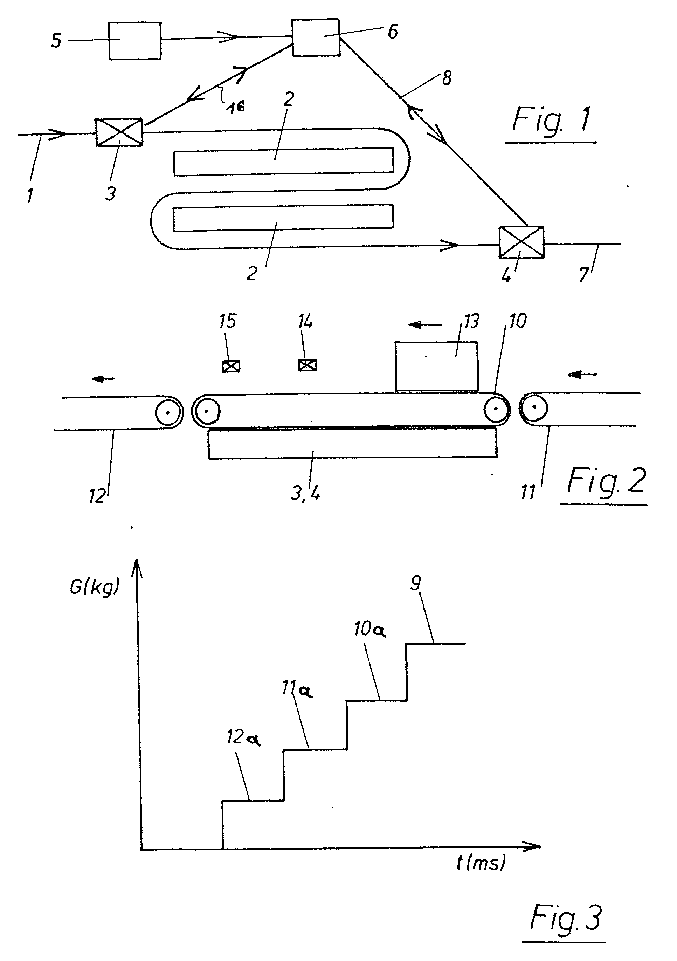

Zunächst sei der grundsätzliche Kommissioniervorgang anhand von Figur 1 erläutert. Vor Durchführung des neuen Verfahrens mussten zunächst alle Artikel des Sortiments exakt verwogen werden. Die Wiegeergebnisse wurden abgelocht und in einem Rechner 6 gespeichert.

Die Gewichtssumme jedes Auftrages wird beim Erstellen des Kommissionierbelegs über den Rechner ermittelt, gespeichert und zusätzlich auf dem Beleg ausgedruckt.

Das Kommissionieren geschieht erfindungsgemäss wie folgt : Am Eingang 1 einer Transportstrecke werden Behälter 13 (vgl. Fig. 2) auf ein Förderband aufgesetzt und in Pfeilrichtung durch das Lager transportiert, dessen Regale bei Position 2 angedeutet sind. Eingangsseitig des Lagers ist im Transportfluss eine erste Waage 3 und ausgangsseitig ebenfalls im Transportfluss eine zweite Waage 4 angeordnet.

Zu kommissionierende Aufträge werden bei einem Bestelleingang 5 aufgenommen und dem zentralen Rechner 6 zugeleitet, der u. a. auf eine Zielsteuerung für die zu kommissionierenden Artikel durchführt. Der Rechner kennt also das Gewicht der jeweils in einem der Behälter befindlichen Waren am Ausgang 7 des Warenlagers. Dies ist das sog. Sollgewicht.

Zur Feststellung des Istgewichts jeder Kommission dienen die beiden Waagen 3 und 4. Die eingangsseitig des Lagers vorgesehene Waage 3 misst das Leergewicht des Behälters und teilt dieses Leergewicht über eine Leitung 16 dem Rechner 6 mit. Dies wird in einzelnen weiter unten noch anhand der Figuren 2 und 3 noch erläutert. Anschliessend wird der Behälter an den Regalen 2 vorbeigeführt und dabei auftragsgebunden kommissioniert, d. h. mit den betreffenden Artikeln gefüllt. Anschliessend wird der gefüllte Behälter an der ausgangsseitigen Waage 4 abermals gemessen, und dieses Gesamtgewicht wird über eine Leitung 8 dem Rechner 6 zugeleitet.

Der Rechner kennt daher nicht nur das Sollgewicht (über den Eingang 5), sondern auch das Istgewicht der betreffenden Kommission, das er durch Differenzbildung des Gesamtgewichts (Waage 4) abzüglich des Leergewichts (Waage 3) ermittelt. Der Rechner vergleicht das Sollgewicht mit dem Istgewicht. Stimmen beide Gewichte innerhalb einer vorgegebenen Toleranzgrenze überein, so steht fest, dass der betreffende Auftrag richtig kommissioniert wurde, und der betreffende Behälter kann zum Versand kommen. Stellt der Rechner eine Abweichung des Sollgewichts vom Istgewicht fest, so wird der betreffende Behälter ausgeschleust, und seine Kommission wird kontrolliert bzw. neu zusammengestellt.

Gegebenenfalls kann auch auf die eingangsseitige Waage 3 mit Leitung 16 verzichtet werden, insbesondere wenn die Leergewichte der Behälter einander für den vorgesehenen Kontrollzweck betrachtet gleich sind.

Figur 2 zeigt den eigentlichen Wiegungsvorgang an den Waagen 3, 4. Auf die Waage ist dabei ein Förderband 10 aufgesetzt, das in Pfeilrichtung angetrieben ist. Vor und hinter diesem Förderband befinden sich weitere Förderbänder 11 bzw. 12, wodurch deutlich wird, dass die Waage 3 bzw. 4 sich im Transportfluss befindet. Der kistenförmige Behälter 13 läuft auf den Anfang der Wägebrücke auf, wie zeichnerisch in Figur 2 dargestellt. Die Waage ist dauernd eingeschaltet und beginnt jetzt mit dem Wiegungsvorgang. Weil das Gewicht des Behälters 13 (mit oder ohne in ihm befindlichen Artikeln) mit dem Auflaufen des Behälters auf die Wägebrücke wächst, durchläuft das von der Waage gemessene Gewicht die in Fig. 3 angedeuteten Meßstufen 12a, 11a, 10a und 9.

Über dem Förderband 10 und in Höhe der auf ihm vorbeigeführten Behälter 13 befindet sich wenigstens ein Impulsgeber 14, 15, und zwar an einem Ort derart, dass die Waage — abhängig von den zu erwartenden Gewichten — mit Sicherheit eingeschwungen ist. An der Aussenwand des Behälters 13 ist ein Code angebracht, der vom Impulsgeber 14, 15 gelesen wird, sobald der Behälter mit seinem Code am Impulsgeber vorbeigeht. Dabei wird der Behälter und mit ihm der betreffende Auftrag identifiziert und über die Leitung 8 bzw. 16 an den Rechner 6 geleitet. Die Identifizierung des Behälters kann aber auch von einem anderen Lesegerät erfolgen, das beispielsweise kurz vor oder kurz hinter der Waage 3 bzw. 4 angeordnet ist.

Der Impulsgeber 14 und gegebenenfalls 15 bewirkt, dass über die Leitung 8 bzw. 16 das jetzt gemessene, eingeschwungene Gewicht an den Rechner 6 übermittelt wird. Dieser speichert das Gewicht, wenn es sich um das Taragewicht der Waage 3 handelt, oder er führt jetzt den Sollwert-Istwert-Vergleich durch.

Der Behälter 13 ist jetzt auf das Förderband 12 gelangt und geht von dort zu einer Versandstation oder er wird ausgeschleust, wenn der Sollwert-Istwert-Vergleich ergeben hat, dass die betreffende Kommission nicht richtig zusammengestellt wurde.

Figur 3 erläutert den Einschwingvorgang der Waage und auch, dass die unterschiedlichsten Gewichte gemessen werden können. Man macht sich dabei die Tatsache zu Nutze, dass dem Rechner 6 über den Eingang 5 vorher das am Ausgang zu erwartende Gewicht mitgeteilt wurde. Dieses Gewicht wird nun über die Leitung 8 der ausgangsseitigen Waage 4 mitgeteilt, die daher bereits vor dem Betreten des betreffenden Behälters auf die Waage 4 auf die betreffende Gewichtsstufe voreingestellt werden kann.

Dieses Verfahren ist grundsätzlich auch bei der eingangsseitigen Waage 3 möglich, dort aber unnötig, weil die leeren Behälter nur innerhalb von verhältnismässig kleinen Grenzen in ihrem Gewicht schwanken. Die eingangsseitige Waage 3 kann daher — entweder über die Leitung 16 oder direkt — auf das übliche Leergewicht eines der Behälter 13 voreingestellt werden.

Die Impulsgeber 14, 15 befinden sich etwa im letzten Drittel der Länge des Förderbandes 10. Bei Versuchen wurde eine Waage vom Typ KOMRB der Firma August Sauter GmbH, Albstadt, verwendet. Diese Waage arbeitet ohne Wägehub.

Versuche haben ergeben, dass zur Messung von Artikeln bis zu einem Gesamtgewicht von 60 kg eine Länge des Förderbandes 10 von einem Meter ausreicht, wobei die Bandgeschwindigkeit so gewählt wurde, dass dieser Meter innerhalb von zwei Sekunden zurückgelegt wurde. Innerhalb dieser zwei Sekunden konnten die Artikel auf plus/minus 5 Gramm genau gewogen werden, was für die meisten Anwendungsfälle eine ausreichende Wiegegenauigkeit darstellt, insbesondere wenn die Waage als Kontrolle für das richtige Kommissionieren eingesetzt wird, bei dem die im Behälter befindlichen Artikel über das Gesamtgewicht gezählt werden.

Im Vorhergehenden wurde vorausgesetzt, dass die Waage 3, 4 ohne Wägehub arbeitet. Es ist aber auch möglich, mit einem Wägehub arbeitende Waagen einzusetzen, wenn dafür gesorgt wird, dass das zu wiegende Gut in etwa auf dem Niveau der Waagebrücke auf dieses gefördert wird. Dies kann beispielsweise dadurch erreicht werden, dass der letzte Teil des vorhergehenden Förderbandes 11 — und gegebenenfalls auch der erste Teil des nachfolgenden Förderbandes 12 — nach unten federnd ausgebildet sind, so dass die dort auflaufenden Behälter 13 schon in etwa das Niveau der Wärebrücke der betreffenden Waage erreichen. Insgesamt kann festgestellt werden, dass bei der Erfindung jede ausreichend genaue Waage eingesetzt werden kann.

Vorzugsweise erhält die Waage nach einer vorgegebenen Zeit vom Rechner 6 einen Impuls, der die Waage wieder tariert, d. h. wieder auf Null stellt. Dadurch wird erreicht, dass etwa vorkommende Gewichtsänderungen des Förderbandes, beispielsweise durch daran anhaftenden Schmutz oder dergleichen, ausgeglichen werden. Ein solcher Tarierimpuls wird in Abständen von wenigstens einigen Minuten an die Waage gegeben, gegebenenfalls auch nach jeder Wägung.

Die Länge des Förderbandes 10 und die Förderbandgeschwindigkeit hängen derart zusammen, dass die Waage eine ausreichende Zeit haben muss, um das betreffende Gewicht zu messen. Je höher die Fördergeschwindigkeit des Bandes ist, um so länger muss daher das Band gewählt werden, beziehungsweise umgekehrt.

Mit der Erfindung können innerhalb durch die Praxis vorgegebener Grenzen beliebige Gewichte gemessen werden. Dies ergibt sich daraus, dass beispielsweise beliebig zusammengestellte Warenmengen in den Behältern 13 gewogen werden müssen. Beim Stand der Technik wurden innerhalb vorgegebener Grenzen gleichbleibende Gewichte gemessen.

**Patentansprüche**

1. Verfahren zum Kontrollieren des Gewichts von in Behältern (13) kommissionierten Warensendungen, wobei man das Leergewicht eines Behälters (13) im Durchlauf mißt und einem Kommissionierrechner (6) übermittelt, das Gewicht des mit den Artikeln dieser Kommission gefüllten Behälters (13) ebenfalls im Durchlauf mißt und an den Rechner (6) übermittelt, der die Differenz beider Gewichte als Istgewicht der Kommission ermittelt und mit dem ihm eingegebenen Sollgewicht der betreffenden Kommission vergleicht, worauf bei einem Abweichen des Istgewichts vom Sollgewicht über eine vorbestimmte Toleranzgrenze hinaus der betreffende Behälter (13) ausgesondert wird, wobei jedem Behälter (13) zugeordneter und mitgegebener Erkennungscode beim Wiegen gelesen und dem Rechner übermittelt wird und beide Waagen (3, 4) das Gewicht ständig messen und das gemessene Gewicht dem Kommissionierrechner übermitteln, sobald der Einschwingvorgang der betreffenden Waage (3, 4) zur Ruhe gekommen ist, dadurch gekennzeichnet, daß der Rechner (6) über den ihm übermittelten Erkennungscode jeweils das Sollgewicht und das Istgewicht desselben Behälters (13) einander zuordnet, daß auf die Wiegebrücke der Waage (3, 4) ein angetriebenes Förderband (10) aufgesetzt ist, über dem sich wenigstens ein Impulsgeber (14, 15) befindet, der über eine Signalleitung (8, 16) mit dem Rechner (6) verbunden ist, und daß sich vor und hinter diesem angetriebenen Förderband (10) weitere angetriebene Förderbänder (11, 12) befinden.

2. Verfahren nach Anspruch 1, dadurch gekennzeichnet, daß das Gewicht in mehreren aufeinander folgenden Meßstufen gewogen und das zu erwartende Gewicht dem Rechner (6) übermittelt wird, der vor Durchführung der Wägung die von diesem Gewicht abhängige, zu erwartende Meßstufe (9, 10a, 11a, 12a) der Waage (3, 4) übermittelt und die Waage (3, 4) auf diese Meßstufe voreinstellt.

3. Vorrichtung zur Durchführung des Verfahrens nach Anspruch 1 oder 2, mit einem Rechner (6), einer Waage (3, 4), auf der ein angetriebenes Förderband (10) aufgesetzt ist, wobei sich vor und hinter diesem Förderband weitere angetriebene Förderbänder (11, 12) befinden, dadurch gekennzeichnet, daß in Transportrichtung des Förderbandes hintereinander zwei Impulsgeber (14, 15) angeordnet sind, deren Meßwerte gemittelt werden.

4. Vorrichtung nach Anspruch 3, dadurch gekennzeichnet, daß an der Außenwand der Behälter (13) ein optisch lesbarer Code angebracht ist.

5. Vorrichtung nach Anspruch 4, dadurch gekennzeichnet, daß der Impulsgeber (14, 15) als Lichtschranke ausgebildet ist, die in der Höhe reflektierender Folien an den Behältern (13) angebracht ist.

## Claims

1. Process for checking the weight of goods shipments consigned in containers (13), wherein the empty weight of a container (13) is measured in continuous movement and transmitted to a consignment computer (6), the weight of the container (13) filled with the articles of this consignment is likewise measured in continuous movement and transmitted to the computer (6), which establishes the difference between the two weights as actual weight of the consignment and compares it with the set-point weight of the relevant consignment input into the computer, whereupon if a deviation between actual weight and set-point weight exceeding a predetermined tolerance limit occurs, the relevant container (13) is separated out, wherein a recognition code associated with and accompanying each container (13) is read at weighing and transmitted to the computer and both the weighing machines (3, 4) continually measure the weight and transmit the measured weight to the consignment computer as soon as the initial oscillation of the relevant weighing machine (3, 4) has settled down, characterized in that the computer (6) associates the set-point weight and the actual weight of the same container (13) with each other via the recognition code transmitted to it, that a driven conveyor belt (10) is mounted on the weighbridge of the weighing machine (3, 4), above which conveyor belt at least one pulse generator (14, 15) is situated, which is connected via a signal line (8, 16) with the computer (6), and that in front of and behind this driven conveyor belt (10) further driven conveyor belts (11, 12) are situated.

2. Process according to Claim 1, characterized in that the weight is weighed in a plurality of successive measuring steps and the weight to be expected is transmitted to the computer (6), which, before the weighing is carried out, transmits the expected measuring steps (9, 10a, 11a, 12a), dependent upon this weight, to the weighing machine (3, 4) and presets the weighing machine (3, 4) to these measuring steps.

3. Device for carrying out the process according to Claim 1 or 2, comprising a computer (6), a weighing machine (3, 4), on which a driven conveyor belt (10) is mounted, further driven conveyor belts (11, 12) being situated before and behind this conveyor belt, characterized in that two pulse generators (14, 15) are disposed one behind another in the direction of conveying of the conveyor belt, the readings of these pulse generators being averaged.

4. Device according to Claim 3, characterized in that an optically readable code is provided on the outer wall of the containers (13).

5. Device according to Claim 4, characterized in that the pulse generator (14, 15) is constructed as a light barrier, which is mounted at the level of reflecting foils on the containers (13).

## Revendications

1. Procédé pour contrôler sur un ensemble de récipients (13) le poids des marchandises placées dans chaque récipient, en exécution d'une commande à expédier, ce procédé consistant à mesurer le poids à vide de chaque récipient (13) en cours de déplacement, et à communiquer ce poids à un ordinateur central (6) qui sert à traiter les commandes ; puis à mesurer le poids du récipient (13) garni des articles de la commande considérée, en opérant encore au passage sur le récipient en déplacement, et en communiquant cette deuxième valeur de poids à l'ordinateur (6) ; l'ordinateur déterminant la différence entre le poids à vide du récipient et le poids du récipient garni, pour en tirer le poids effectif préparé pour la commande en cause, afin de comparer ce poids effectif avec un poids de consigne prévu pour cette même commande, puis, en cas de différence entre le poids de consigne et la valeur effective du poids, au-delà d'une marge de tolérance prédéterminée, à mettre à part le récipient anormal (13) pourvu d'un marquage d'identification codé, qui est lui au moment de chaque opération de pesée ; et les opérations de pesée étant effectuées au moyen de deux appareils de pesage (3, 4) opérant en continu, pour communiquer à l'ordinateur central les valeurs de poids ainsi mesurées, dès que l'appareil de pesage correspondant (3, 4) s'est stabilisé, caractérisé en ce que l'ordinateur (6) associe l'un à l'autre le poids de consigne et la valeur effective du poids de chaque récipient (13), d'après le marquage d'identification codé de ce récipient qui lui est communiqué, en ce qu'une bande transporteuse (10) à moteur d'entraînement est disposée sur le pont de pesée de chaque appareil de pesage (3, 4) au moins un capteur à impulsions (14, 15) se trouvant disposé au-dessus de la bande transporteuse précitée (10), et relié à l'ordinateur (6) par une ligne d'information (8, 16) et en ce que d'autres bandes transporteuses à moteur (11, 12) se trouvent en amont et en aval de cette bande transporteuse à moteur (10).

2. Procédé selon la revendication 1, caractérisé en ce qu'on effectue chaque pesée en opérant en plusieurs paliers successifs, en faisant connaître à l'avance à l'ordinateur (6) le poids prévu pour chaque opération, l'ordinateur commandant alors à l'avance la mise en position d'attente de la balance (3, 4), sur le palier de pesée (9, 10a, 11a, 12a) à prévoir, en fonction du poids attendu.

3. Dispositif pour l'exécution du procédé selon la revendication 1 ou 2, comportant un ordinateur (6) et un appareil de pesage (3, 4) sur lequel est montée une bande transporteuse à moteur (10) à laquelle sont associées, en amont et en aval, d'autres bandes transporteuses à moteur (11, 12) ; ce dispositif étant caractérisé en ce qu'il comporte deux capteurs à impulsions (14, 15), montés l'un derrière l'autre, et en ce que les mesures effectuées par ces deux capteurs sont moyennées.

4. Dispositif selon la revendication 3, caractérisé en ce que chaque récipient (13) porte sur une face externe un marquage codé à lecture optique.

5. Dispositif selon la revendication 4, caractérisé en ce que le capteur à impulsions (14, 15) est constitué par un barrage photoélectrique, placé à la hauteur d'étiquettes réfléchissantes collées sur chaque récipient (13).

*Fig. 1*

*Fig. 2*

*Fig. 3*